# EUROPEAN PATENT APPLICATION

(11) **EP 1 764 274 A1**
(43) Date of publication of application: **21.03.2007**
(21) Application number: 05255762.6
(22) Date of filing: 16.09.2005
(51) Int. Cl.: B60S 9/215, B62D 59/04

(54) **Apparatus for moving trailers**

(71) Applicant: Purple Line Limited, Ipswich IP7 5AL (GB)
(72) Inventor: Barrow, Stuart Ross Boden, Suffolk CO10 8AS (GB); Plumb, Jonathan Rae, Essex CM77 8AW (GB)
(74) Representative: Dummett, Thomas Ian Peter

(57) **Abstract**

The invention provides apparatus (6) for moving a trailer. The apparatus has at least one drive unit (8) a mounting (16) and an actuation means (36) associated with the, or each, drive unit (8). The, or each, drive unit (8) includes a roller (12) for frictionally engaging a wheel (4) of a trailer and a motor (14) for driving the roller. The mounting (6) is suitable for securing the drive unit (8) to a trailer, the, or each, drive unit (8) is movably coupled to the mounting (6). The, or each, actuation means (36) is coupled to the mounting (6) such that, when actuated, the actuation means (36) cause the drive unit (8) with which it is associated to move relative to the mounting (6) so that, in use, the actuation means (36) can be actuated to move the drive means (8) between an engaged position, in which the roller (12) is engaged with the wheel (4) of a trailer, and a released position, in which the roller (12) is not engaged with the wheel (4) of a trailer. The or each drive unit (8) comprises an actuation edge (46) and each actuation means (36) comprise a cam (38) rotatable about a first axis (42). The cam (38) has a circumferential edge (40). The radial distance from the first axis (42) of the circumferential edge (40) varies around the circumference and the circumferential edge (40) slidably engages with the actuation edge (46) of the drive means (8) such that, as the cam (38) is rotated, the actuation edge (46) is forced to move relative to the first axis (42) thereby causing the drive unit (8) to move relative to the mounting (16).

## Description

### BACKGROUND

### a. Field of the Invention

The present invention relates to apparatus for moving trailers and in particular to apparatus for moving caravans.

### b. Related Art

Trailers, which term will be used herein to include caravans, are typically non-motorised wheeled devices which are usually moved by being hitched to an automobile and towed behind it. When such towing is not practical, for example for moving a short distance, re-positioning or moving in a confined space the trailer may be manually moved by dragging or pushing. However, such manual moving of the trailer is labour intensive and may be extremely difficult, especially with a heavy trailer, or on uneven or inclined ground.

Various devices are known to assist a user in such situations. These devices include manually driven jockey wheels and motorised jockey wheels, but these devices will include small wheels, which may encounter problems on particularly rough terrain.

Another known device drives the wheels of the trailer by using motorised rollers which engage with the tyres on the wheels of the trailer. The wheels of the trailer can then be driven by causing the traction rollers to rotate.

It is desirable to disengage the traction rollers during towing of the trailer and it is known to move the traction rollers substantially linearly towards or away from the wheel, or using a liner actuation means such as a threaded bolt which, when rotated, forces the rollers towards, or away from, the tyres.

Such linear methods necessitate a steep increase in force and required effort after engagement is initially achieved in order to achieve the high friction engagement between roller and tyre required to enable the roller to transfer torque to the wheel. The high friction engagement requires a significant force to be maintained forcing the roller onto the tyre. The steep increase in force is required to overcome tyre deformation due to the tyre being inflated and friction within the actuation mechanism.

In order to maintain the required high friction engagement, it is known to include an over-centre type mechanism in the actuation means. However, the effort required during actuation peaks immediately prior to the over-centre mechanism moves over-centre. At this moment the mechanism may be both uncomfortable and unstable to operate. Indeed the increase in force puts significant stresses, not only on the user, but on the mechanism and related structure and this can lead to component, or more often, failure of welds formed during construction.

It is also known to use a cross actuation bar to couple the actuating means on each side of the caravan which allows engagement of the rollers on both sides of the caravan at the same time. Such cross actuation bars are often option features and are typically removable. The actuation bars are often exposed when in use and can therefore suffer damage, or they may distort through use making cross actuation unsuccessful.

It is an object of the present invention to provide apparatus for moving trailers that addresses some of the above problems.

### SUMMARY OF THE INVENTION

According to the invention there is provided apparatus for moving a trailer, the apparatus comprising at least one drive unit, a mounting and an actuation means associated with the, or each, drive unit, wherein:
the, or each, drive unit comprises and a roller for frictionally engaging a wheel of a trailer and a motor for driving the roller;
the mounting is suitable for securing the drive unit to a trailer, the, or each, drive unit being movably coupled to the mounting;
the, or each, actuation means is coupled to the mounting such that, when actuated, the actuation means cause the drive unit with which it is associated to move relative to the mounting so that, in use, the actuation means can be actuated to move the drive means between an engaged position, in which the roller is engaged with the wheel of a trailer, and a released position, in which the roller is not engaged with the wheel of a trailer; and
characterised in that the or each drive unit comprises an actuation edge and each actuation means comprise a cam rotatable about a first axis, the cam having a circumferential edge, the radial distance from the first axis of the circumferential edge varying around the circumference and, the circumferential edge slidably engages with the actuation edge of the drive means such that, as the cam is rotated, the actuation edge is forced to move relative to the first axis thereby causing the drive unit to move relative to the mounting.

By using a cam arrangement which slidably engages with an actuation edge of the drive unit a reliable actuation of the drive unit between the engaged position and released position can be achieved.

It is preferred that the drive unit is pivotably coupled to the mounting and the actuation means causes the drive unit to pivot about a pivot axis. The pivoting motion of the drive unit together with the cam actuation provides a particularly advantageous means for engaging the roller with a wheel of the trailer as it avoids a linear movement of the drive roller towards the wheel. The cam and pivot mechanism enables a mechanical advantage to be utilised to apply a large force to ensure that the friction engagement between the wheel and roller is sufficient to avoid the roller slipping during use.

The apparatus preferably comprises two drive units so that a drive unit can drive each side of the trailer. The mounting preferably comprises an elongate beam with a first drive unit being movably coupled to the elongate beam at or adjacent a first end and a second drive unit being movably coupled to the elongate beam at or adjacent a second end. This allows a single mounting to be used to secure both drive units to the trailer. The elongate beam is preferably hollow and is preferably arranged so that the elongate beam can be extended or shortened to suit a particular width of trailer. The elongate beam may comprise three sections, a centre section and first and second end sections, the first and second end sections being dimensioned such that they slide within or over the centre section to allow the overall length of the elongate beam to be adjusted. The sections can preferably be secured relative to one another when the desired length has been reached.

The elongate beam preferably extends substantially along the first axis and a link bar may extend within the elongate beam to couple the cam of the first actuation means to the cam of the second actuation means so that rotation of one cam causes a corresponding rotation of the other cam. This allows cross actuation of the actuation means so that a user need not separately actuate the actuation means on each side of the trailer. The link bar transmits a rotation motion therealong and is therefore unlikely to suffer significant distortion. The beam may not extend along the first axis and/or the link bar may not extend within the elongate beam, but such an arrangement is preferred due to the reduced packaging space required and the protection afforded to the link bar by the elongate beam.

The drive unit is preferably biased towards the released position and the actuation edge is preferably forced to move away from the first axis as the, or each, drive unit is moved to the engaged position. This enables the cam to be of a simple construction with a radially outwardly facing edge forming the circumferential edge. It should be understood that the cam may comprise a plate including a slot, a radially inwardly directed edge of which could form the circumferential edge which engages with an actuation edge that protrudes into the slot, but the construction of such a mechanism is more complex.

The circumferential edge of the cam in the, or each, actuation means preferably includes a radially inwardly directed recess at a position corresponding with the engaged position and preferably also with the released position. In the released position, the biasing of the drive means towards the released position will cause the engagement edge to move into the recess.

To move the cam so that the engagement edge moves from the recess requires the overcoming of an initial barrier. The initial barrier is caused by the engaging edge having to move radially away from the first axis against the force biasing the engagement edge towards the first axis. The biasing force may be the force of the resilient biasing of the drive unit toward the released position, or may by the force caused by the engagement between the roller and tyre or wheel. The recesses therefore act to retain the drive unit in a predetermined position to avoid accidental engagement or disengagement of the roller and wheel.

The circumferential edge of the cam in the, or each, actuation means also preferably includes a radially outwardly directed projection to substantially prevent rotation of the cam past a position corresponding with the engaged position.

The radial distance of the circumferential edge from the first axis may vary in any suitable way, but preferably increases over an actuation portion of the circumference.

The invention extends to a trailer having wheels, the trailer being fitted with apparatus for moving said trailer as described above.

The invention will now be further described, by way of example, with reference to the accompanying drawings, in which:

### BRIEF DESCRIPTION OF THE DRAWINGS

Figure 1 shows a schematic view from above of a trailer fitted with apparatus for moving said trailer;
Figure 2 shows the view in Figure 1, but with the floor and chassis rail of the trailer removed;
Figure 3 shows a perspective view an end the apparatus of Figure 1;
Figure 4 shows a detailed view of a cam used in the apparatus of Figure 1;
Figure 5 shows a side view of the apparatus of Figure 1 in the engaged position; and
Figure 6 shows the same view as Figure 4, but with the apparatus in the released position.

### DETAILED DESCRIPTION

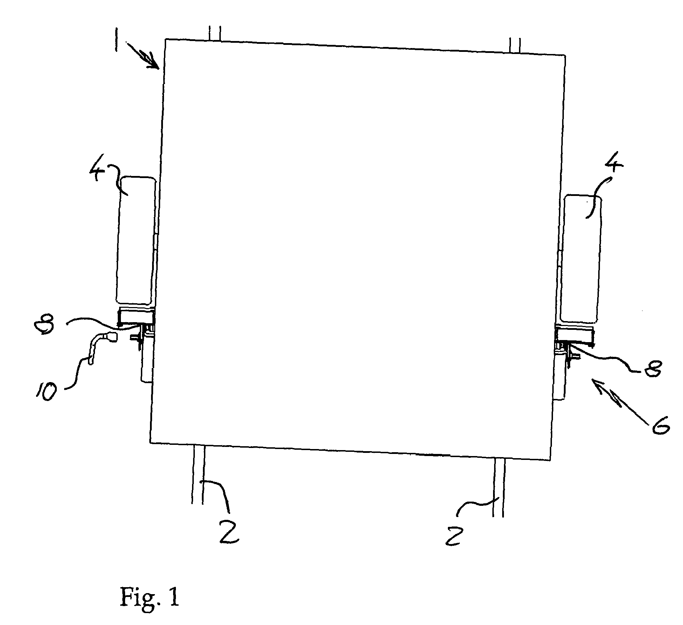

Figure 1 shows a trailer floor 1 having chassis rails 2 and wheels 4. The trailer (not shown) also includes apparatus 6 for moving the trailer. The apparatus 6 includes drive units 8 which can be engaged with the wheels 4 using a wrench or wheel brace 10 as will be explained in more detail below.

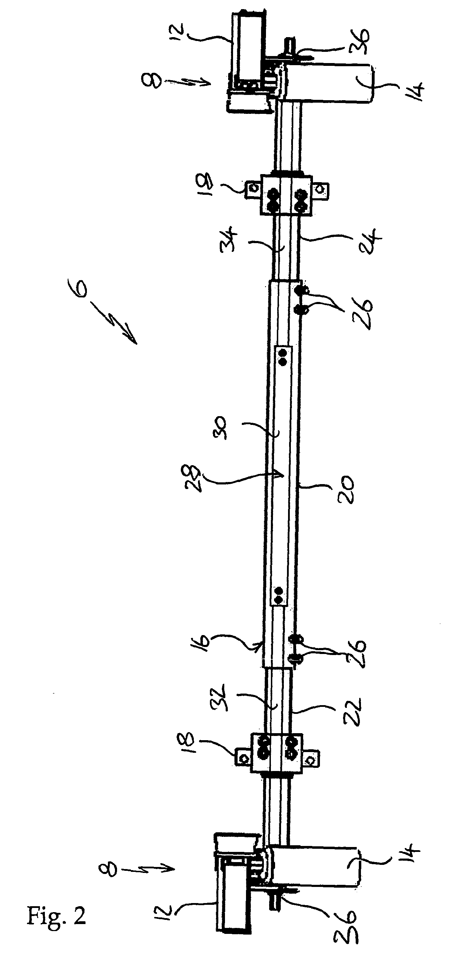

Figure 2 shows a view from above of the apparatus 6 of Figure 1. The apparatus comprises two drive units 8. Each drive unit 8 comprises a roller 12 for frictionally engaging a wheel 4 of a trailer and a motor 14 for driving the roller 12. The apparatus 8 includes a mounting 16 which is suitable for securing to the chassis rails 2 of the trailer using brackets 18. The mounting 16 is in the form of a beam which comprises three beam sections, a centre section 20 and first and second end sections 22,24. The end sections 22,24 are dimensioned so that they slide within the centre section 20 so that the length of the beam can be adjusted. The end sections 22,24 are secured relative to the centre section 20 using screws 26.

The apparatus includes a link bar 28 which extends trough the mounting 16. The link bar comprises three bar sections, those being a centre bar section 30 and first and second end bar sections 32,34 which are dimensioned to allow length adjustment as detailed above. The end bar sections 32,34 engage with the centre bar section 30 so that torque can be transmitted along the link bar 28.

The link bar 28 couples together actuation means 36 which are associated with each drive unit 8 so that both actuation means 36 are actuated by rotation of one as will be described in more detail below.

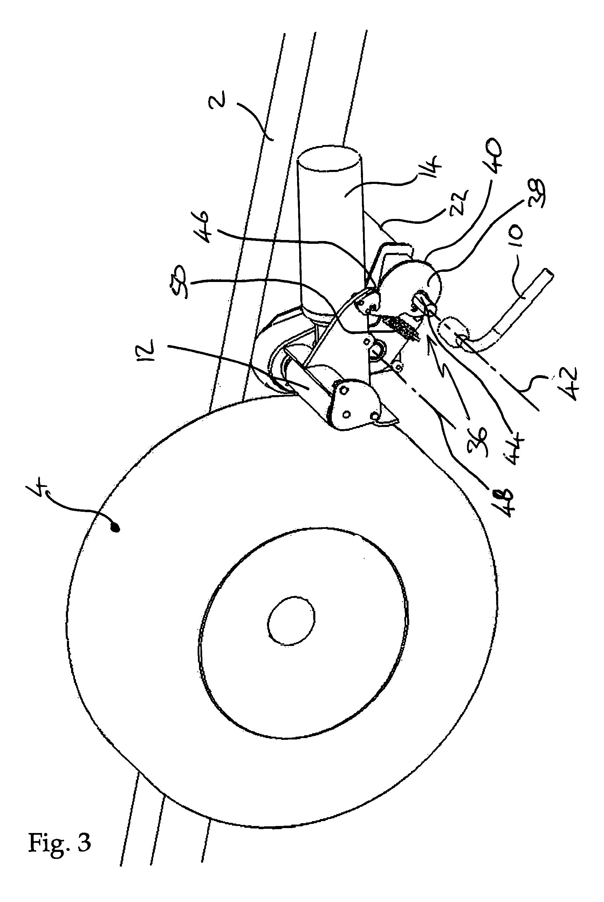

Figure 3 shows a perspective view of one side of the apparatus 8. The actuation means 36 comprise a cam 38 having a circumferential edge 40. The cam 38 is rotatable about a first axis 42. In this example the cam 38 is rotatable by engaging a wheel brace 10 with projection 44 which extends from the cam 38 axially along the first axis 42.

The drive unit 8 includes an engagement edge 46 which slidably contacts the circumferential edge 40 of the cam 38. The drive unit 8 is pivotably coupled to the first end section 22 of the mounting 16 so that the drive unit is pivotable about a pivot axis 48. The drive unit 8 is resiliently biased by a spring 50 so that the engagement edge 46 is maintained in sliding contact with the circumferential edge 40.

The cam 38 is shaped so that the radial distance of the circumferential edge 40 from the first axis 42 varies about the circumference. By rotating the cam 38 about the first axis 42 the radial distance of the engagement edge 46 from the first axis 42 is caused to vary due to the sliding contact between the engagement edge 46 and the circumferential edge 40.

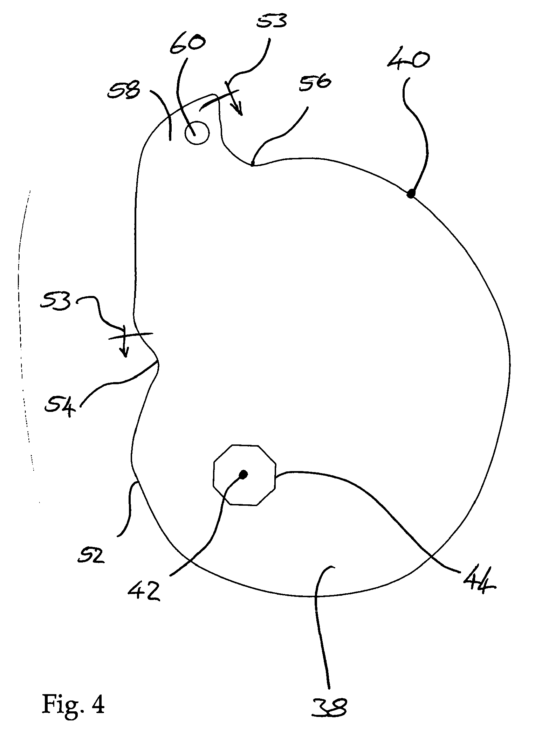

Figure 4 shows a detailed view of the cam 38. The cam 38 includes a circumferential edge 40 which includes an actuation portion 52 which is indicated by the portion if the circumferential edge 40 between the limit arrows 53. The actuation portion 52 includes a radially inwardly directed recess 54 corresponding to the released position and an inwardly directed recess 56 corresponding to the engaged position. The radial distance from the first axis 42 of the actuation portion 52 of the circumferential edge 40 generally increases between the recesses 54 and 56. The cam 38 also includes a radially outward projection 58 which substantially prevents the cam 38 from being rotated past the recess 56 corresponding to the engaged position. The cam 38 also includes a stop 60 extending from the projection 58. The stop 60 is for engaging with a hook 62 extending from the engaging edge 46 when the drive unit 8 and cam 38 are in the engaged position. It can be seen from this figure that the projection 44 which extends along the first axis 42 has a hexagonal profile to enable a wheel brace 10, wrench or other tool to engage with the projection to assist in rotating the cam 38.

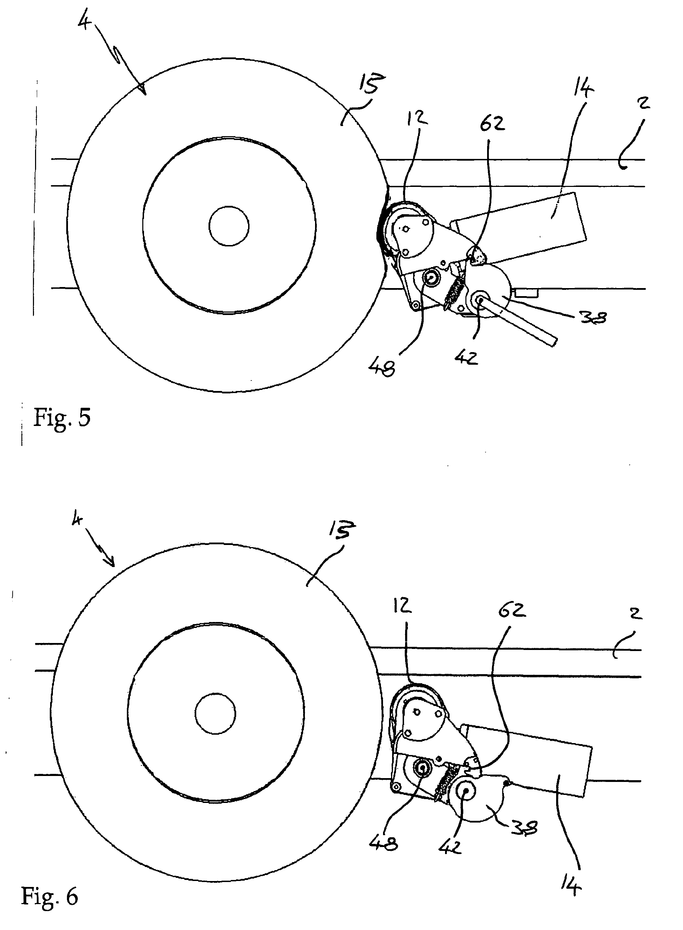

Figure 5 shows a side view of the apparatus 8 in which the drive unit 8 is in the engaged position. In the engaged position the roller 12 is in frictional contact with the wheel 4. In fact, the roller 12 is forced into the tyre 13 of the wheel with such force that the tyre 13 is deformed. The cam 38 is in the engaged position and the engagement edge 46 is located in the recess 56 and the hook 62 is engaged with the stop 60.

Figure 6 shows a side view of the apparatus 8 in which the drive unit 8 is in the released position. In the released position the roller 12 is not in contact with the wheel 4. The cam 38 is in the released position and the engagement edge 46 is located in the recess 54.

It can be seen from Figures 5 and 6 that the cam 38 is rotated about the first axis 42 in a clockwise direction in order to move the drive unit 8 from the released position (as shown in Figure 6) to the engaged position (as shown in Figure 5) and in an anti-clockwise direction to move the drive unit 8 from the engaged position to the released position.

It should be understood that the invention has been described above by way of example only and that modifications in detail may be made without departing from the scope of the invention as described in the claims.

## Claims

1. Apparatus for moving a trailer, the apparatus comprising at least one drive unit, a mounting and an actuation means associated with the, or each, drive unit, wherein:
the, or each, drive unit comprises a roller for frictionally engaging a wheel of a trailer and a motor for driving the roller;
the mounting is suitable for securing the drive unit to a trailer, the, or each, drive unit being movably coupled to the mounting;
the, or each, actuation means is coupled to the mounting such that, when actuated, the actuation means cause the drive unit with which it is associated to move relative to the mounting so that, in use, the actuation means can be actuated to move the drive means between an engaged position, in which the roller is engaged with the wheel of a trailer, and a released position, in which the roller is not engaged with the wheel of a trailer; and
**characterised in that** the or each drive unit comprises an actuation edge and each actuation means comprise a cam rotatable about a first axis, the cam having a circumferential edge, the radial distance from the first axis of the circumferential edge varying around the circumference and, the circumferential edge slidably engages with the actuation edge of the drive means such that, as the cam is rotated, the actuation edge is forced to move relative to the first axis thereby causing the drive unit to move relative to the mounting.

2. Apparatus as claimed in claim 1, in which the apparatus comprises two drive units.

3. Apparatus as claimed in claim 2, in which the mounting comprises an elongate beam, a first drive unit being movably coupled to the elongate beam at or adjacent a first end and a second drive unit being movably coupled to the elongate beam at or adjacent a second end.

4. Apparatus as claimed in claim 3, in which the elongate beam extends substantially along the first axis and a link bar extends within the elongate beam to couple the cam of the first actuation means to the cam of the second actuation means so that rotation of one cam causes a corresponding rotation of the other cam.

5. Apparatus as claimed in any preceding claim, in which the drive unit is resiliently biased to the released position.

6. Apparatus as claimed in any preceding claim, in which the actuation edge is forced to move away from the first axis as the or each drive unit is moved to the engaged position.

7. Apparatus as claimed in claim 6, in which the circumferential edge of the cam in the, or each, actuation means includes a radially inwardly directed recess at a position corresponding with the engaged position.

8. Apparatus as claimed in claim 6 or claim 7, in which the circumferential edge of the cam in the, or each, actuation means includes a radially inwardly directed recess at a position corresponding with the released position.

9. Apparatus as claimed in any of claims 6 to 8, in which the circumferential edge of the cam in the, or each, actuation means includes a radially outwardly directed projection to substantially prevent rotation of the cam past a position corresponding with the engaged position.

10. Apparatus as claimed in any preceding claim, in which the radial distance of the circumferential edge from the first axis increases over an actuation portion of the circumference.

11. Apparatus as claimed in any preceding claim, in which the, or each, drive unit is pivotably coupled to the mounting and the actuation means cause the drive unit to pivot about a pivot axis.

12. A trailer having at least one wheel, the trailer being fitted with apparatus as claimed in any preceding claim.
